Europäisches Patentamt

European Patent Office

Office européen des brevets

(19)

(11) Veröffentlichungsnummer: **0 298 026 B1**

(12) **EUROPÄISCHE PATENTSCHRIFT**

(45) Veröffentlichungstag der Patentschrift: **16.01.91**

(51) Int. Cl.⁵: **B 65 G 69/28**

(21) Anmeldenummer: **88810404.9**

(22) Anmeldetag: **14.06.88**

(54) **Ladebrücke.**

(30) Priorität: **03.07.87 CH 2540/87**

(43) Veröffentlichungstag der Anmeldung:
**04.01.89 Patentblatt 89/01**

(45) Bekanntmachung des Hinweises auf die
Patenterteilung:
**16.01.91 Patentblatt 91/03**

(84) Benannte Vertragsstaaten:
**DE FR GB**

(56) Entgegenhaltungen:
**FR-A-2 112 163**
**FR-A-2 134 045**
**US-A-3 497 893**

(73) Patentinhaber: **ALUSUISSE-LONZA SERVICES AG**
**Feldeggstrasse 4**
**CH-8034 Zürich (CH)**

(72) Erfinder: **Appelt, Georg**
**Reichenaustrasse 4**
**D-7760 Radolfzell (DE)**
Erfinder: **Kemen, Hans-Jörgen**
**Krähenburgstrasse 18**
**D-7700 Singen (DE)**
Erfinder: **Graf, Werner**
**Schwendenstrasse 8**
**D-7707 Engen (DE)**
Erfinder: **Schmidt, Walter**
**Liptingerstrasse 10**
**D-7706 Honstetten (DE)**

Courier Press, Leamington Spa, England.

## Beschreibung

Die Erfindung betrifft eine Ladebrücke mit schwenkbar an einem verfahrbaren Laufwerk befestigter Brückenplatte, bei der das Laufwerk in einer an einer Rampe angeordneten Laufschiene quer zur Schwenkrichtung der Brückenplatte verfahrbar ist und die Laufschiene als querschnittlich C-förmiges Profil mit von der Schienenrückwand etwa senkrecht abstehendem Dach- und Sockelschenkel und vom Dachschenkel parallel zur Schienenrückwand abragendem, nach unten gerichtetem Schenkelsteg, ausgebildet ist und bei der ein vom Sockelschenkel nach unten ragendes Teil von einem Teil des Laufwerks hintergriffen ist.

Bei einer Ladebrücke der eingangs erwähnten Art ist gemäss der DE—A—31 15 953 ein vom Sockelschenkel der Laufschiene nach unten abgebogener Schenkelsteg vorgesehen. Durch diese Massnahme wird die Montage der Ladebrücke durch frontseitigen Einbau des Laufwerks in die Laufschiene erleichtert. Der abragende Schenkelsteg ist jedoch gegen Verformung durch anfahrende Lastwagen anfällig und muss bei Beschädigung nachgerichtet werden, da andernfalls das Verschieben der Ladebrücke in Längsrichtung der Laufschiene behindert ist.

Angesichts dieser Gegebenheiten ergibt sich die Aufgabe, eine Ladebrücke der eingangs erwähnten Art derart weiterzubilden, dass die Laufschiene gegen Verformungen weitgehend widerstandsfähig ist.

Zur Lösung dieser Aufgabe führt, dass vom Sockelschenkel ein Winkelprofil, dessen Schenkelstreifen mit dem Sockelschenkel querschnittlich ein Dreieck bilden, nach unten abragt, und das Winkelprofil von einem Teil des Laufwerks widerlagerartig hintergriffen ist.

Durch die Anordnung des Winkelprofils wird einerseits die Steifigkeit des Sockelschenkels erhöht und damit das freie Verschieben der Ladebrücke in Längsrichtung der Laufschiene gewährleistet. Andererseits ist eine Verformung der als Widerlager für den hintergreifenden Teil des Laufwerks dienenden Anlagefläche praktisch nicht mehr möglich.

Der das Winkelprofil hintergreifende Teil des Laufwerks ist bevorzugt als frei drehbar gelagertes Kegelrad ausgebildet, dessen Mantelfläche auf dem einen Schenkelsteg des Winkelprofils beim Verschieben der Ladebrücke abrollt. Das Kegelrad kann hierbei verstellbar angeordnet sein.

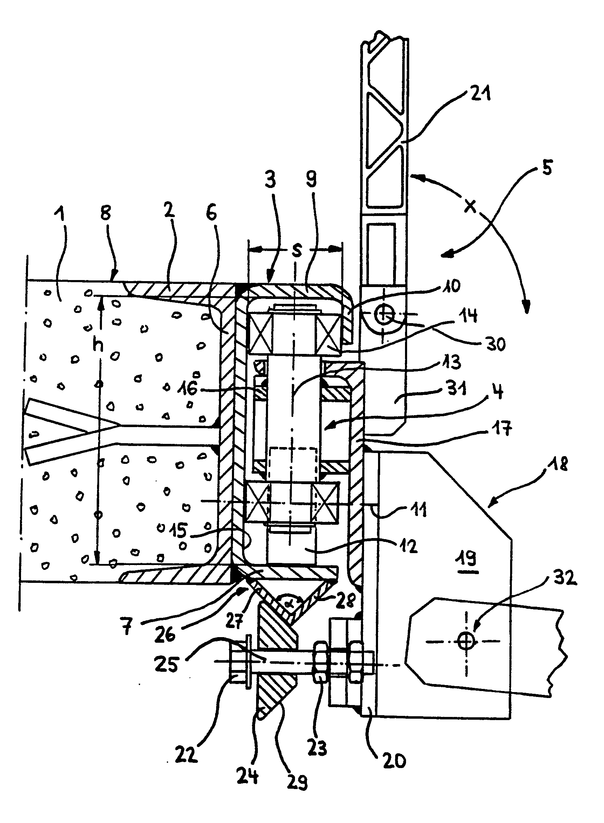

Nachfolgend wird eine bevorzugtes Ausführungsbeispiel der Erfindung anhand der Zeichnung beschrieben. Die Zeichnung zeigt in ihrer einzigen Figur einen Querschnitt durch eine erfindungsgemässe Ladebrücke.

An einer feststehenden Laderampe 1 mit einer Stahleinfassung 2 ist eine Laufschiene 3 zur Aufnahme eines Laufwerks 4 einer Ladebrücke 5 angeschweisst. Die Laufschiene 3 weist eine der Stahleinfassung 2 anliegende Schienenrückwand 6 auf, von deren unterem Ende ein Sockelschenkel 7 rechtwinkelig abragt. Am oberen Ende der Schienenrückwand 6 ragt ein mit der Rampenoberfläche 8 fluchtender Dachschenkel 9 ab, dessen Ende als Schenkelsteg 10 parallel zur Schienenrückwand 6 nach unten abgekantet ist. Der Abstand s zwischen Schienenrückwand 6 und Schenkelsteg 10 beträgt beispielsweise 64 mm, die Höhe h der Schienenrückwand 6 180 mm.

Das in der Laufschiene 3 angeordnete Laufwerk 4 der Ladebrücke 5 weist an horizontalen Achsen 11 aufgehängte Laufräder 12 sowie an vertikalen Achsen 13 angeordnete Führungsrollen 14 auf. Die obere Führungsrolle eines Führungsrollenpaares wird zwischen der Schienenrückwand 6 und dem als Anschlag dienenden Schenkelsteg 10 gehalten, während die untere Führungsrolle sich auf der Innenfläche 15 der Schienenrückwand 6 abwickelt.

Die vertikalen Achsen 13 sind über Querstege 16 mit einem parallel zur Schienenrückwand 6 angeordneten Plattenprofil 17 verbunden, an welchem Halteprofile 18 mit rechtwinklig zur Schienenlängsrichtung abstehenden Profilteilen 19 und einer parallel zu Schienenlängsrichtung verlaufenden Rückwand 20 angeordnet sind. Die Profilteile 19 sind zur Aufnahme von Scharniergelenken 32 eines Hebemechanismus für die Brückenplatte 21 vorgesehen. Die Brückenplatte 21 ist hierbei durch Lagerlaschen 31 gehalten und um eine Drehachse 30 in Richtung x schwenkbar.

An der Rückwand 20 des Halteprofils 18 sind an mittels Gegenmuttern 23 fixierten Schrauben 22 Kegelräder 24 angeordnet, welche auf den jeweiligen Schraubenachsen 25 drehbar gelagert sind.

Vom Sockelschenkel 7 ragt ein Winkelprofil 26 ab, dessen Schenkelstreifen 27, 28 mit dem Sockelschenkel 7 querschnittlich ein Dreieck bilden. Der Winkel α zwischen den Schenkelstreifen 27, 28 beträgt beispielsweise 90°. Der Schenkelstreifen 27 dient als Anschlag für die Kegelräder 24, deren Mantelflächen 29 beim Verschieben der Ladebrücke 5 auf dem Schenkelstreifen 27 abrollen.

## Patentansprüche

1. Ladebrücke mit schwenkbar an einem verfahrbaren Laufwerk (4) befestigter Brückenplatte (21), bei der das Laufwerk in einer an einer Rampe (1) angeordneten Laufschiene (3) quer zur Schwenkrichtung der Brückenplatte verfahrbar ist und die Laufschiene als querschnittlich C-förmiges Profil mit von der Schienenrückwand (6) etwa senkrecht abstehenden Dach (9)- und Sockelschenkel (7) und vom Dachschenkel parallel zur Schienenrückwand abragendem, nach unten gerichtetem Schenkelsteg (10) ausgebildet ist, und bei der ein vom Sockelschenkel (7) nach unten ragendes Teil von einem Teil des Laufwerks (4) hintergriffen ist, dadurch gekennzeichnet, dass vom Sockelschenkel (7) ein Winkelprofil (26), dessen Schenkelstreifen (27, 28) mit dem Sockelschenkel querschnittlich ein Dreieck bilden, nach unten abragt, und das Winkelprofil von einem Teil des Laufwerks (4) widerlagerartig hintergriffen ist.

2. Ladebrücke nach Anspruch 1, dadurch gekennzeichnet, dass der das Winkelprofil (26) hintergreifende Teil des Laufwerks (4) als drehbar gelagertes Kegelrad (24) ausgebildet ist, dessen Mantelfläche auf dem einen Schenkelstreifen (27) des Winkelprofils beim Verschieben der Ladebrücke (5) abrollt.

3. Ladebrücke nach Anspruch 2, dadurch gekennzeichnet, dass das Kegelrad (24) verstellbar angeordnet ist.

**Revendications**

1. Pont de chargement avec une plaque de pont (21) fixée de façon à pouvoir pivoter sur un dispositif de roulement (4) déplaçable, dans lequel le dispositif de roulement est déplaçable dans une glissière (3) disposée sur une rampe (1) transversalement à la direction du pivotement de la plaque de pont, et la glissière est sous forme d'un profil de section transversale en C avec un montant supérieur (9) et un montant inférieur (7) qui s'écartent sensiblement perpendiculairement de la paroi dorsale (6) de la glissière et un côté de montant (10) qui fait saillie depuis le montant supérieur parallèlement à la paroi dorsale de la glissière et qui est dirigé vers le bas, et dans lequel une partie qui fait saillie vers le bas depuis le montant inférieur (7) est saisie par derrière par une partie du dispositif de roulement (4), caractérisé en ce que depuis le montant inférieur (7) fait saillie vers le bas un profil angulaire (26) dont les côtés de montant (27, 28) forment avec le montant inférieur un triangle en section transversale, et le profil angulaire est saisi par derrière à la manière d'une butée par une partie du dispositif de roulement (4).

2. Pont de chargement selon la revendication 1, caractérisé en ce que la partie du dispositif de roulement (4) qui saisit par derrière le profil angulaire (26) est sous forme d'une roue conique (24) disposée de façon à pouvoir tourner et dont la surface latérale route sur l'un des côtés de montant (27) du profil angulaire lors du déplacement du pont de chargement (5).

3. Pont de chargement selon la revendication 2, caractérisé en ce que la roue conique (24) est disposée de façon réglable.

**Claims**

1. Loading bridge having a bridge plate (21) fixed pivotably to moveable running gear (4), in which the running gear can be moved transversely to the pivotting direction of the bridge plate in a running rail (3) arranged on a ramp (1), and the running rail is designed as a section which is C-shaped in cross-section and has top (9) and base legs (7) projecting approximately perpendicularly from the rear wall (6) of the rail and a leg web (10) projecting from the top leg parallel to the rear wall of the rail and directed downwards, and in which a part of the running gear (4) reaches behind a part projecting down from the base leg (7), characterized in that an angle section (26), whose leg strips (27, 28), in cross-section, form a triangle with the base leg, projects down from the base leg (7), and a part of the running gear (4) reaches in the manner of an abuttment behind the angle section.

2. Loading bridge according to Claim 1, characterized in that the part of the running gear (4) reaching behind the angle section (26) is designed as a rotateably mounted bevel wheel (24) whose circumferential surface rolls on the one leg strip (27) of the angle section during displacement of the loading bridge (5).

3. Loading bridge according to Claim 2, characterized in that the bevel wheel (24) is arranged to be adjustable.